# FASCICULE DE BREVET EUROPEEN

(11) **EP 0 762 604 B1**
(45) Date de publication et mention de la délivrance du brevet: **09.06.1999**
(21) Numéro de dépôt: 96401878.2
(22) Date de dépôt: 02.09.1996
(51) Int. Cl.: H02K 3/28

(54) **Moteur électrique à courant continu et procédé de fabrication de ce moteur**
Gleichstromelektromotor und Verfahren seiner Herstellung
DC-electric motor and method of manufacturing thereof

(30) Priorité: 04.09.1995 FR 9510351
(43) Date de publication de la demande: 12.03.1997
(73) Titulaire: ECIA - EQUIPEMENTS ET COMPOSANTS POUR L'INDUSTRIE AUTOMOBILE, F-25400 Audincourt (FR)
(72) Inventeur: Darceot, Michel, 25310 Herimoncourt (FR)
(74) Mandataire: Moncheny, Michel

(56) Documents cités:
- DE-A- 4 403 302
- US-A- 2 999 953

## Description

La présente invention concerne un moteur électrique à courant continu et un procédé de fabrication de ce moteur.

Elle s'applique en particulier aux moteurs électriques à commutation électronique utilisés notamment dans les groupes moto-ventilateurs équipant les véhicules automobiles.

On connaît déjà dans l'état de la technique un moteur électrique à courant continu, du type comprenant un induit muni d'une armature de forme générale cylindrique portant des bobines conductrices réparties en trois phases et en au moins deux couches, les bobines d'une même phase étant alimentées électriquement simultanément, chaque phase comportant au moins deux paires de bobines diamétralement opposées.

L'induit est par exemple du type carré triphasé comportant douze bobines réparties dans les trois phases, les bobines d'une même phase étant alimentées électriquement simultanément. Chaque phase comporte deux paires de bobines diamétralement opposées. Chaque paire de bobines d'une phase est disposée à angle droit par rapport à l'autre paire de bobines de cette phase.

De façon classique, on enroule les bobines sur l'induit en les répartissant en trois couches successives correspondant aux trois phases de l'induit.

Le bobinage de l'induit est réalisé au moyen d'une bobineuse comportant un bras destiné à enrouler sur l'armature les conducteurs formant les bobines. Le bras enroule successivement les quatres bobines de la couche inférieure (première phase), puis les quatres bobines de la couche intermédiaire (seconde phase) et enfin les quatres bobines de la couche supérieure (troisième phase). Les quatres bobines d'une même phase sont reliées électriquement en série. Les bobines des différentes phases sont espacées entre elles de 30°.

Du fait que les différentes phases de l'induit correspondent à des couches superposées de bobines, les longueurs des conducteurs constituant les phases sont différentes. Il en résulte des résistances de phase différentes et un déséquilibre électrique particulièrement gênant lorsque l'alimentation et la commutation des phases est réalisée par un circuit électronique.

L'invention a notamment pour but de remédier à ce déséquilibre électrique des phases.

A cet effet, l'invention a pour objet un moteur électrique à courant continu, du type précité, caractérisé en ce que les bobines sont réparties en deux couches inférieure et supérieure, les bobines inférieures alternant avec les bobines supérieures, chaque phase comprenant une paire de bobines diamétralement opposées disposée dans la couche inférieure et une paire de bobines diamétralement opposées disposée dans la couche supérieure, ces deux paires étant reliées électriquement en parallèle, chaque bobine comportant deux enroulements inférieur et supérieur et deux conducteurs bobinés ininterrompus reliés électriquement en parallèle, chaque conducteur formant l'enroulement inférieur d'une bobine d'une paire et l'enroulement supérieur de l'autre bobine de cette paire, de manière que ces enroulements inférieur et supérieur soient reliés électriquement en série, et que chaque paire de bobines comprenne une bobine d'entrée de courant dans la paire et une bobine de sortie de courant de cette paire.

Suivant d'autres caractéristiques de ce moteur :
- l'induit est fixe et le moteur comporte de plus un support portant un circuit électronique d'alimentation et de commutation des bobines, et un organe de raccordement électrique de forme générale cylindrique, coaxial à l'armature, comprenant une bague conductrice divisée en secteurs électriquement isolés, cette bague comportant une première face munie de moyens d'accrochage sur l'armature, une seconde face munie de broches conductrices de connexion avec le circuit électronique, et des crochets périphériques conducteurs de connexion des bobines avec la bague, le nombre de broches de connexion étant égal au nombre de secteurs isolés et le nombre de crochets de connexion étant égal au nombre de bobines de l'induit,
- la bague comporte un secteur d'entrée de courant par phase sur lequel sont reliées les extrémités des conducteurs formant les entrées de courant des paires de bobines de cette phase, et un secteur de sortie sur lequel sont reliées toutes les extrémités des conducteurs formant les sorties de courant de toutes les paires de bobines,
- l'induit comporte douze bobines réparties dans les trois phases, les paires de bobines diamétralement opposées d'une même phase étant disposées à angle droit l'une par rapport à l'autre, les crochets de connexion étant réparties angulairement au droit des bobines, l'entrée (respectivement la sortie) de courant de la paire inférieure de bobines d'une phase étant reliée à un crochet d'entrée (respectivement de sortie) de courant décalé de 60° par rapport à la bobine d'entrée (respectivement de sortie) de courant de cette paire, et l'entrée (respectivement la sortie) de la paire supérieure de bobines d'une phase étant reliée à un crochet d'entrée (respectivement de sortie) de courant disposé au droit de la bobine d'entrée (respectivement de sortie) de courant de cette paire, de manière que les deux crochets d'entrée de courant reliés aux deux paires de bobines d'une phase soient juxtaposés et appartiennent à un même secteur d'entrée de courant et que tous les crochets de sortie de courant soient juxtaposés et appartiennent au secteur de sortie.

L'invention a également pour objet un procédé pour la fabrication d'un moteur électrique à courant continu tel que défini précédemment, caractérisé en ce qu'on forme chaque paire de bobines diamétralement opposées au moyen d'une bobineuse à deux bras, ces deux bras réalisant simultanément, au cours d'une première étape, les deux enroulements inférieurs des bobines, puis au cours d'une seconde étape, après rotation d'un demi-tour de l'armature autour de son axe, les enroulements supérieurs des bobines, les deux conducteurs correspondants étant enroulés par les deux bras de la bobineuse au cours de ces deux étapes suivant des sens symétriques par rapport à un plan diamétral de l'armature perpendiculaire à l'alignement des bobines de la paire.

L'invention sera mieux comprise à la lecture de la description qui va suivre donnée uniquement à titre d'exemple et faite en se référant aux dessins annexés dans lesquels :
- la figure 1 et une vue en perspective en coupe axiale d'un moteur électrique selon l'invention ;
- la figure 2 est une vue en perspective éclatée de certains éléments du moteur représenté à la figure 1;
- la figure 3 est une vue en perspective, à échelle agrandie, d'un organe de raccordement électrique du moteur selon l'invention;
- la figure 4 est une vue de face schématique de l'induit bobiné du moteur selon l'invention;
- la figure 5 est un schéma d'une phase de l'induit;
- la figure 6 est un schéma développé des bobines de l'induit;
- les figures 7 à 9 sont des vues similaires à la figure 4 montrant différentes étapes du bobinage de l'induit.

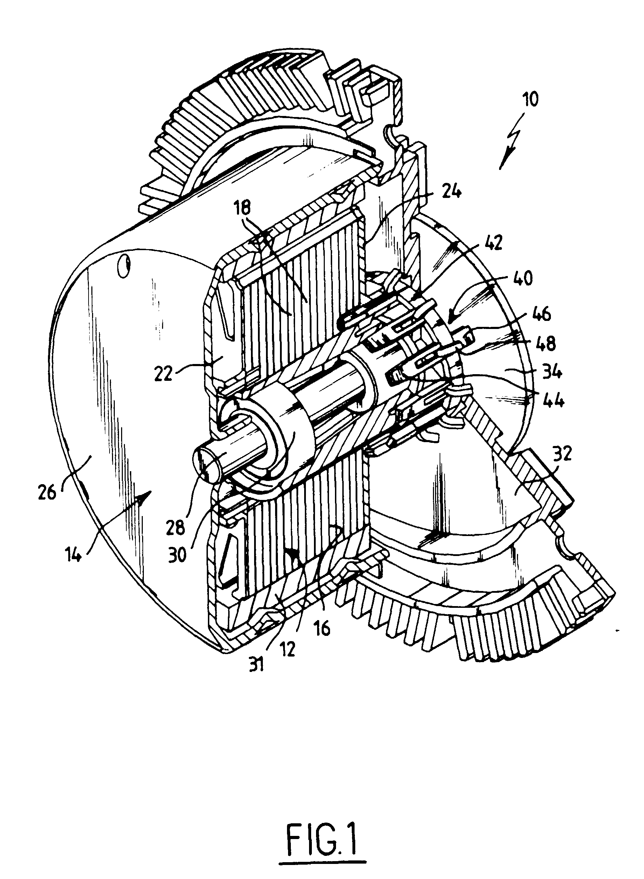

On a représenté sur la figure 1 un moteur électrique à courant continu selon l'invention, désigné par la référence générale 10.

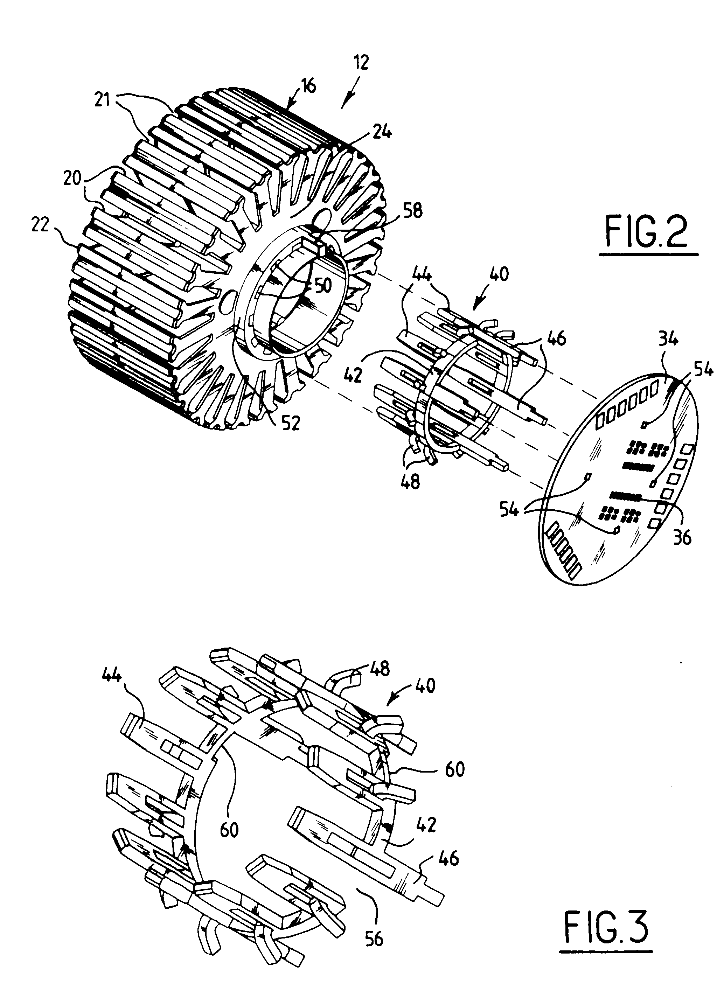

Ce moteur 10 comporte un induit bobiné fixe 12 et un inducteur rotatif 14. Pour des raisons de clarté, les bobines conductrices de l'induit 12 n'ont pas été représentées sur les figures 1 et 2.

Le bobinage de l'induit est du type carré triphasé et sera décrit ultérieurement.

L'induit 12 comporte une armature 16 de forme générale cylindrique comprenant, de façon classique, un empilage de tôles 18 délimitant des encoches 20 d'accrochage des bobines clairement représentées sur la figure 2. Les encoches 20 sont séparées par des dents 21.

L'armature 16 comporte également des joues d'isolation électrique 22, 24, recouvrant ces faces.

L'inducteur 14 comporte une armature rotative 26 en forme de bol dans laquelle est logé l'induit 12.

L'armature 26 d'inducteur est reliée de façon connue en soi à un arbre rotatif 28 porté par des moyens de roulement 30 intercalés entre cet arbre 28 et l'armature 16 d'induit.

Des aimants permanents 31 sont accrochés de façon connue en soi sur le contour interne de l'armature 26 d'inducteur.

Le côté ouvert de l'armature 26 d'inducteur est obturé par un flasque fixe 32 portant une plaque 34 formant support pour un circuit électronique 36 d'alimentation électrique et de commutation des bobines de l'induit 12.

Le circuit électronique 36 est raccordé électriquement aux bobines de l'induit 12 par un organe 40 de forme générale cylindrique qui est montré en détail aux figures 2 et 3. L'organe 40 est coaxial à l'armature 16.

L'organe de raccordement électrique 40 comprend une bague conductrice 42 comportant une première face munie d'au moins deux pions axiaux 44 d'accrochage sur l'armature 16 d'induit et une seconde face munie d'au moins deux broches axiales conductrices 46 de connexion avec le circuit 36 de commutation.

La bague conductrice 42 comporte également au moins deux crochets périphériques conducteurs 48 de connexion des bobines de l'induit avec cette bague.

De préférence, les pions d'accrochage 44, les broches 46 et les crochets 48 de connexion sont venus de matière avec la bague 42, les crochets 48 étant formés par des languettes recourbées de crevés ménagés dans les pions d'accrochage 44.

Dans l'exemple décrit, l'organe de raccordement électrique 40 comprend douze pions d'accrochage 44, autant de crochets 48 et quatre broches de connexion 46.

Les pions d'accrochage 44 sont emboîtés dans des trous 50 de forme complémentaire ménagés dans une couronne d'accrochage 52 venue de matière avec une joue 24 d'isolation électrique.

Les broches de connexion 46 sont emboîtées dans des perçages 54 ménagés à travers la plaque 34 de support du circuit électronique.

Les extrémités des conducteurs formant les entrées et les sorties de courant des bobines de l'induit 12 sont reliées aux crochets de connexion 48 par soudage.

Les broches de connexion 46 s'étendent dans les perçages 54, à travers le flasque 32 et la plaque 34, leurs extrémités libres faisant saillie sur la face de cette plaque opposée à l'induit 12 et étant reliées à des conducteurs du circuit électronique 36 par soudage.

Si nécessaire, les broches de connexion 46 sont revêtues de manchons d'isolation empêchant tout contact électrique entre ces broches et le flasque 32.

Le contour de la bague 42 est interrompu de manière à délimiter un évidement axial 56 destiné à coopérer avec une saillie axiale 58 de forme complémentaire, ménagée sur la couronne 52. L'évidement 56 et la saillie 58 forment des moyens détrompeurs pour le positionnement angulaire correct des pions 44 par rapport à l'armature 16.

L'organe de raccordement électrique 40 comporte également des moyens détrompeurs par espacement angulaire irrégulier des broches de connexion 46 et des perçages 54, pour la connexion correcte de ces broches 46 avec le circuit électronique 36.

Les moyens détrompeurs que l'on vient de décrire permettent donc d'assurer un positionnement relatif correct de l'armature 16 d'induit, de l'organe de raccordement électrique 40 et de la plaque 34 de support de circuit électronique.

La bague 42 comporte des zones amincies 60, de préférence suivant sa direction axiale comme cela est représenté sur les figures, destinées au sectionnement de cette bague en différents secteurs électriquement isolés.

Lors de la fabrication de l'induit 12, on emboîte l'organe de raccordement électrique 40 dans l'armature 16, puis on enroule les bobines dans les encoches 20 avec des moyens classiques utilisés habituellement pour la fabrication d'induits à collecteur et balais.

Après soudage des extrémités des conducteurs des bobines sur les crochets de connexion 48, on sectionne la bague 42 à différents endroits de manière à diviser cette bague en secteurs électriquement isolés et à réaliser les couplages de bobines souhaités.

On notera que sur les figures 1 à 3 la bague 42 est représentée d'un seul tenant, avant sectionnement en différents secteurs isolés.

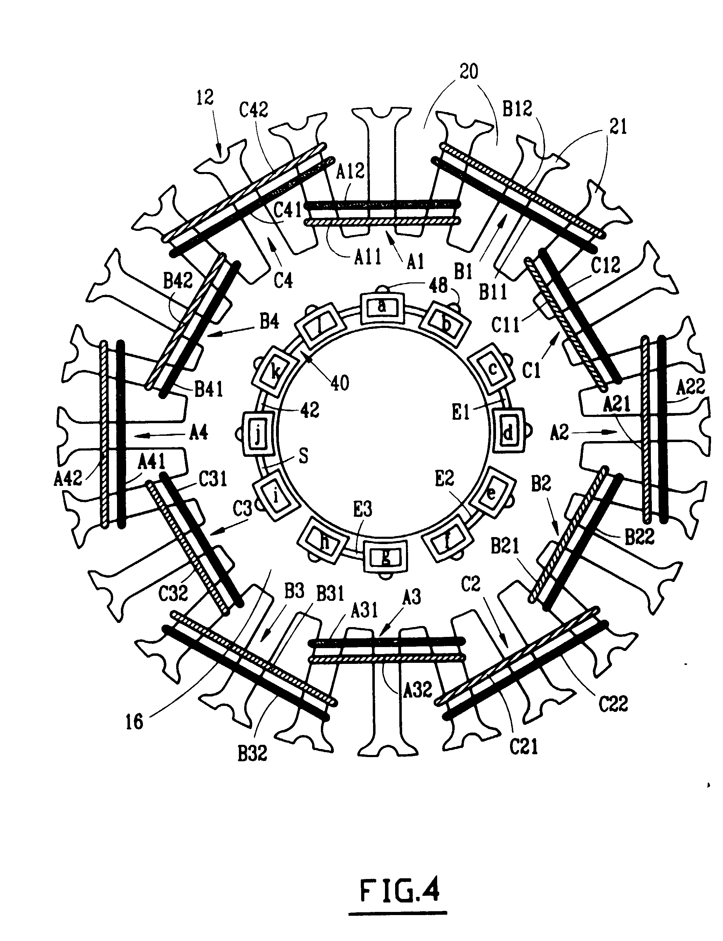

On décrira ci-dessous le bobinage de l'induit 12 en se référant aux figures 4 à 9.

L'induit 12 comprend vingt quatre encoches 20 et autant de dents 21. Comme précisé précédemment, l'induit 12 est du type carré triphasé. Il comporte douze bobines A1 à A4, B1 à B4, C1 à C3 réparties en trois phases. Les bobines d'une même phase sont alimentées électriquement simultanément. Chaque phase comporte deux paires de bobines diamétralement opposées. Ces paires sont disposées à angle droit l'une par rapport à l'autre.

Les bobines sont réparties sur deux couches inférieure et supérieure, les bobines inférieures A1, A3, C1, C3, B2, B4 alternant avec les bobines supérieures B1, B3, A2, A4, C2, C4.

Chaque phase comporte une paire de bobines diamétralement opposées disposée dans la couche inférieure et une paire de bobines diamétralement opposées disposée dans la couche supérieure.

Chaque bobine A1 à A4, B1 à B4, C1 à C4 comporte deux enroulements inférieur A11, B11, C11, A21, B21, C21, A31, B31, C31, A41, B41, C41 et supérieur A12, B12, C12, A22, B22, C22, A32, B32, C32, A42, B42, C42.

Les enroulements inférieur et supérieur d'une même bobine sont schématisés sur les figures 4 et 7 à 9 par une seule spire.

On notera que les bobines sont enroulées sur l'armature 16 de manière que chacune entoure trois dents 21. Une bobine de la couche supérieure est intercalée entre deux bobines de la couche inférieure de manière à recouvrir partiellement ces deux dernières bobines. Ainsi, chaque bobine de la couche inférieure entoure une dent qui est commune avec la bobine de la couche supérieure immédiatement voisine.

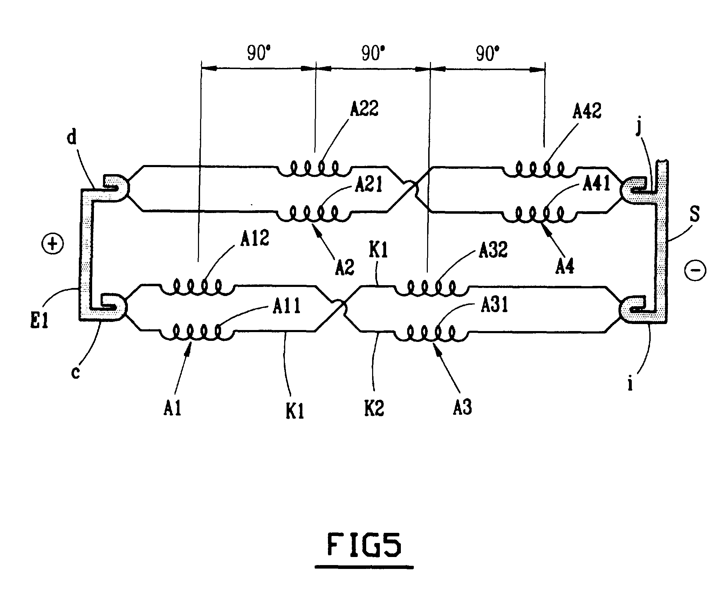

On a représenté sur la figure 5 les bobines d'une phase de façon schématique. Sur cette figure, on voit que chaque bobine comporte deux conducteurs bobinés K1, K2 ininterrompus reliés électriquement en parallèle. Chaque conducteur K1, K2 forme l'enroulement inférieur A11, A21, A31, A41 d'une bobine d'une paire et l'enroulement supérieur A32, A42, A12, A22 de cette paire, de manière que ces enroulements inférieur et supérieur soient reliés électriquement en série.

Chaque paire de bobines diamétralement opposées comporte ainsi une bobine A1, A2 d'entrée de courant dans la paire et une bobine A3, A4 de sortie de courant dans la paire.

L'agencement des autres phases de l'induit est analogue à l'agencement de la phase représentée sur la figure 5.

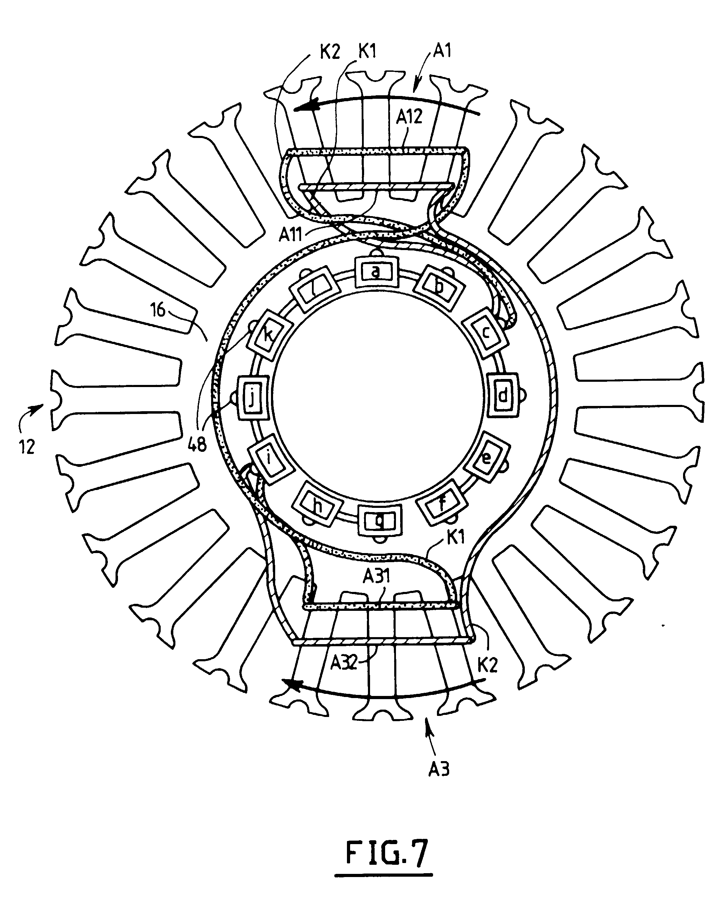

Le bobinage de deux bobines diamétralement opposées est effectué au moyen d'une bobineuse classique à deux bras, selon le procédé qui sera décrit ci-dessous en se référant à la figure 7. Sur cette figure on a représenté uniquement une paire inférieure de bobines diamétralement opposées A1, A3.

Au cours d'une première étape, les bras réalisent simultanément les deux enroulements inférieurs A11, A31 des bobines en enroulant les deux conducteurs correspondants K1, K2 suivant des sens symétriques par rapport au plan diamétral de l'armature 16 perpendiculaire à l'alignement des bobines A1, A2.

Les enroulements inférieurs étant achevés, on fait tourner l'armature 16 autour de son axe d'un demi-tour, sans modifier la position des bras de la bobineuse.

Dans une seconde étape, les bras de la bobineuse réalisent simultanément les deux enroulements supérieurs A12, A32 des bobines en enroulant les deux conducteurs correspondants K1, K2 dans les mêmes sens qu'au cours de la première étape.

Les sens d'enroulement des conducteurs K1, K2 par les bras de la bobineuse sont indiqués par des flèches sur la figure 7.

Le bobinage complet de l'induit 12 est effectué de la façon suivante.

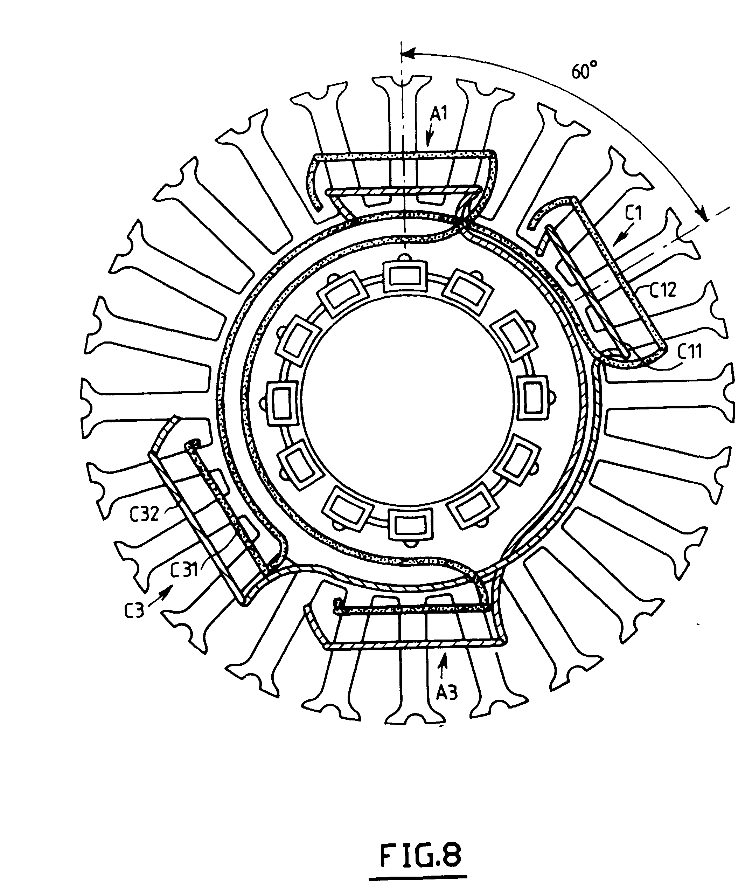

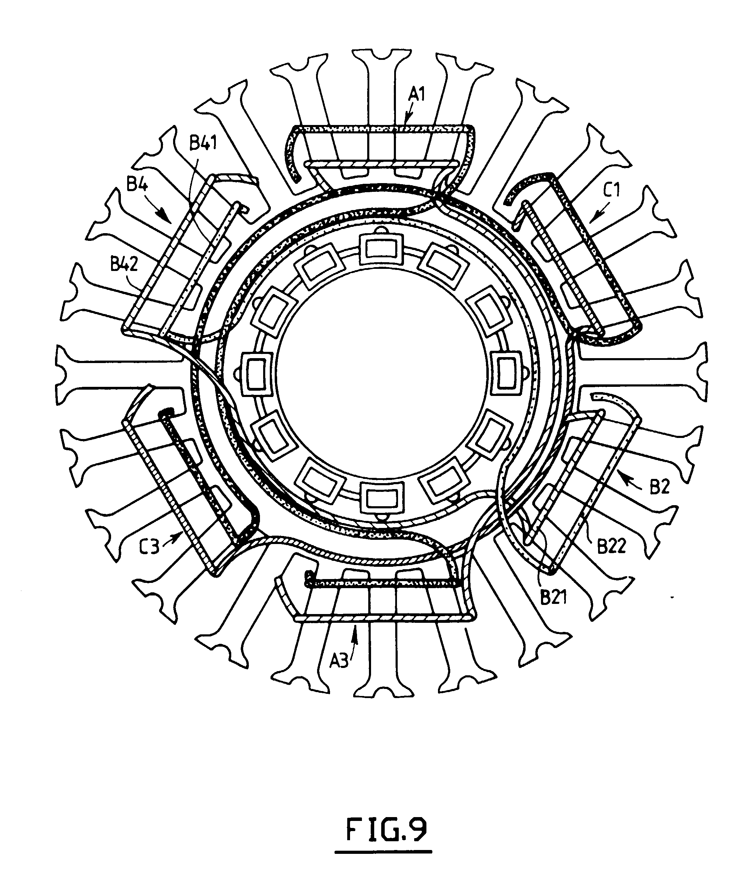

Dans un premier temps, on réalise toutes les bobines de la couche inférieure. Pour cela, on réalise la paire inférieure de bobines d'une première phase, comme décrit ci-dessus et illustré sur la figure 7, puis on réalise la paire inférieure de bobines d'une seconde phase, cette paire étant décalée de 60° par rapport à la précédente, comme illustré sur la figure 8, et enfin on réalise la paire inférieure de bobines de la troisième phase, comme illustré sur la figure 9.

Dans un deuxième temps, on réalise les bobines de la couche supérieure, de façon analogue à celles de la couche inférieure, de manière à obtenir l'induit bobiné représenté à la figure 4.

Toutes les paires de bobines diamétralement opposées sont réalisées selon le même procédé décrit précédemment et au moyen de la même bobineuse à deux bras.

L'utilisation d'une bobineuse à deux bras permet de réaliser le bobinage de l'induit de façon automatique et rapide.

Le moteur selon l'invention comporte autant de crochets 48 que de bobines d'induit, à savoir douze. Ces crochets 48 sont repérés par des références alphabétiques a à 1 et sont répartis angulairement au droit des bobines de l'induit.

On voit notamment sur la figure 4 que la bague 42 est divisée en quatre secteurs électriquement isolés. La bague 42 comporte un secteur E1 à E3 d'entrée de courant par phase sur lequel sont reliées les extrémités des conducteurs K1, K2 formant les entrées de courant des deux paires de bobines de cette phase, et un secteur de sortie S sur lequel sont reliées toutes les extrémités des conducteurs K1, K2 formant les sorties de courant de toutes les paires de bobines. Ainsi, les deux paires de bobines d'une même phase sont reliées électriquement en parallèle.

On notera que la bague 42 comporte autant de broches de connexion 44 que de secteurs E1 à E3, S.

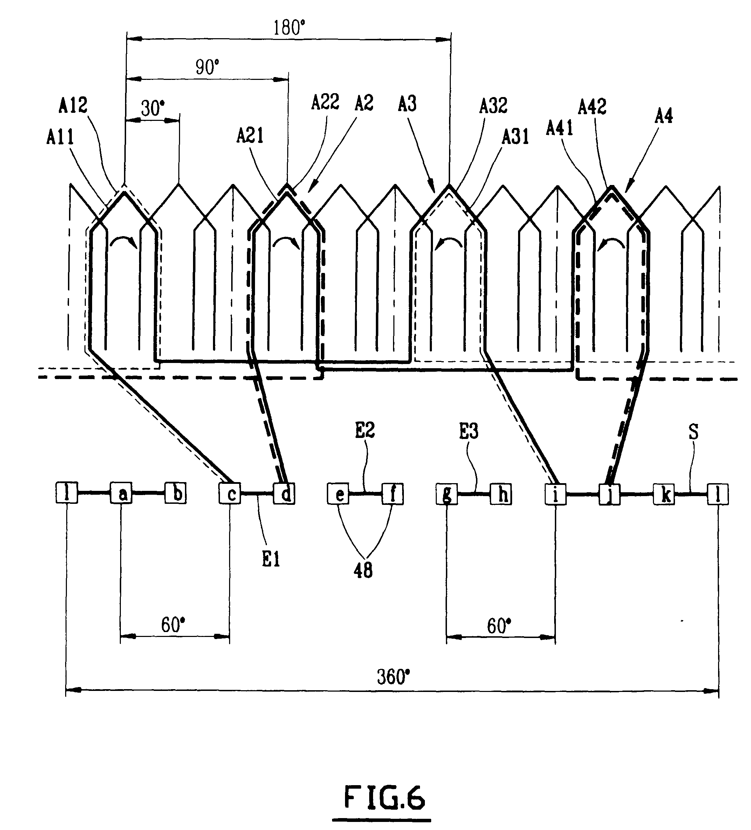

On se référera maintenant à la figure 6 qui illustre clairement le raccordement électrique des bobines d'une phase aux crochets 48.

Sur cette figure, on voit que l'entrée de courant de la paire inférieure (appartenant à la couche inférieure) de bobines A1, A3 d'une phase est reliée à un crochet d'entrée de courant c décalé de 60°, dans le sens horaire, par rapport à la bobine d'entrée de courant A1 de cette paire. De même, la sortie de courant de la paire inférieure de bobines A1, A3 d'une phase est reliée à un crochet de sortie de courant i décalé de 60°, dans le sens horaire, par rapport à la bobine de sortie de courant A3 de cette paire.

Par contre, l'entrée de courant de la paire supérieure (appartenant à la couche supérieure) de bobines A2, A4 d'une phase est reliée à un crochet d'entrée de courant d disposé au droit de la bobine d'entrée de courant A2 de cette paire. De même la sortie de courant de la paire supérieure de bobines A2, A4 d'une phase est reliée à un crochet de sortie de courant j disposé au droit de la bobine de sortie de courant A4 de cette paire.

On obtient ainsi, d'une part, que les deux crochets d'entrée de courant reliés aux deux paires de bobines d'une même phase soient juxtaposés et appartiennent à un même secteur d'entrée de courant E1 à E3, et d'autre part, que tous les crochets de sortie de courant soient juxtaposés et appartiennent au même secteur de sortie de courant S.

On notera que pour des raisons de clarté, les connexions de toutes les bobines de l'induit ne sont pas représentées sur la figure 6. Sur la figure 5, on a représenté les crochets d'entrée de courant c, d d'une phase, correspondant à une polarisation positive du courant (+), et les crochets de sortie de courant i, j de cette phase, correspondant à une polarisation négative du courant (-).

L'invention ne se limite pas au mode de réalisation illustré sur les figures.

En particulier, l'invention peut s'appliquer à tout moteur électrique à courant continu dont l'induit comporte des bobines conductrices réparties en trois phases et en au moins deux couches, chaque phase comportant au moins deux paires de bobines diamétralement opposées.

L'invention comporte de nombreux avantages.

En particulier, elle permet de réaliser rapidement le bobinage de l'induit avec des moyens automatiques.

Le bobinage selon l'invention des bobines diamétralement opposées permet de réduire de moitié le nombre de crochets de connexion des bobines par rapport aux induits classiques comportant un nombre identique de bobines alimentées électriquement par des moyens à balais et collecteur.

Par ailleurs, les différentes phases de l'induit du moteur selon l'invention sont équilibrées électriquement.

## Revendications

1. Moteur électrique à courant continu, du type comprenant un induit (12) muni d'une armature (16) de forme générale cylindrique portant des bobines conductrices (A1 à A4, B1 à B4, C1 à C4) réparties en trois phases et en au moins deux couches, les bobines d'une même phase étant alimentées électriquement simultanément, chaque phase comportant au moins deux paires de bobines diamétralement opposées, caractérisé en ce que les bobines sont réparties en deux couches inférieure et supérieure, les bobines inférieures (A1, A3, C1, C3, B2, B4) alternant avec les bobines supérieures (B1, B3, A2, A4, C2, C4), chaque phase comprenant une paire de bobines diamétralement opposées disposée dans la couche inférieure et une paire de bobines diamétralement opposées disposée dans la couche supérieure, ces deux paires étant reliées électriquement en parallèle, chaque bobine comportant deux enroulements inférieur (A11, B11, C11, A21, B21, C21, A31, B31, C31, A41, B41, C41) et supérieur (A12, B12, C12, A22, B22, C22, A32, B32, C32, A42, B42, C42) et deux conducteurs bobinés (K1, K2) ininterrompus reliés électriquement en parallèle, chaque conducteur (K1, K2) formant l'enroulement inférieur d'une bobine d'une paire et l'enroulement supérieur de l'autre bobine de cette paire, de manière que ces enroulements inférieur et supérieur soient reliés électriquement en série, et que chaque paire de bobines comprenne une bobine d'entrée de courant dans la paire et une bobine de sortie de courant de cette paire.

2. Moteur électrique selon la revendication 1, caractérisé en ce que l'induit (12) est fixe, et en ce que le moteur comporte de plus un support (34) portant un circuit électronique (36) d'alimentation et de commutation des bobines, et un organe (40) de raccordement électrique de forme générale cylindrique, coaxial à l'armature (16), comprenant une bague conductrice (42) divisée en secteurs électriquement isolés (E1, E2, E3, S), cette bague (42) comportant une première face munie de moyens (44) d'accrochage sur l'armature, une seconde face munie de broches conductrices (46) de connexion avec le circuit électronique (36), et des crochets périphériques conducteurs (48) de connexion des bobines avec la bague (42), le nombre de broches de connexion (46) étant égal au nombre de secteurs isolés (E1, E2, E3, S) et le nombre de crochets de connexion (48) étant égal au nombre de bobines de l'induit.

3. Moteur électrique selon la revendication 2, caractérisé en ce que la bague (42) comporte un secteur d'entrée de courant (E1 à E3) par phase sur lequel sont reliées les extrémités des conducteurs (K1, K2) formant les entrées de courant des paires de bobines de cette phase, et un secteur de sortie (S) sur lequel sont reliées toutes les extrémités des conducteurs (K1, K2) formant les sorties de courant de toutes les paires de bobines.

4. Moteur électrique selon la revendication 3, caractérisé en ce que l'induit (12) comporte douze bobines réparties dans les trois phases, les paires de bobines diamétralement opposées d'une même phase étant disposées à angle droit l'une par rapport à l'autre, les crochets de connexion (48) étant réparties angulairement au droit des bobines, l'entrée (respectivement la sortie) de courant de la paire inférieure de bobines d'une phase étant reliée à un crochet d'entrée (respectivement de sortie) de courant décalé de 60° par rapport à la bobine d'entrée (respectivement de sortie) de courant de cette paire, et l'entrée (respectivement la sortie) de la paire supérieure de bobines d'une phase étant reliée à un crochet d'entrée (respectivement de sortie) de courant disposé au droit de la bobine d'entrée (respectivement de sortie) de courant de cette paire, de manière que les deux crochets d'entrée de courant reliés aux deux paires de bobines d'une phase soient juxtaposés et appartiennent à un même secteur d'entrée de courant (E1 à E3) et que tous les crochets de sortie de courant soient juxtaposés et appartiennent au secteur de sortie (S).

5. Procédé de fabrication d'un moteur électrique selon l'une quelconque des revendications précédentes, caractérisé en ce qu'on forme chaque paire de bobines diamétralement opposées au moyen d'une bobineuse à deux bras, ces deux bras réalisant simultanément, au cours d'une première étape, les deux enroulements inférieurs des bobines, puis au cours d'une seconde étape, après rotation d'un demi-tour de l'armature (16) autour de son axe, les enroulements supérieurs des bobines, les deux conducteurs (K1, K2) correspondants étant enroulés par les deux bras de la bobineuse au cours de ces deux étapes suivant des sens symétriques par rapport à un plan diamétral de l'armature (16) perpendiculaire à l'alignement des bobines de la paire.

## Patentansprüche

1. Gleichstromelektromotor mit einem Anker (12) mit einem Gestell (16) von allgemeiner zylindrischer Form, das leitende Spulen (A1 bis A4, B1 bis B4, C1 bis C4) trägt, die auf drei Phasen und auf mindestens zwei Schichten verteilt sind, wobei die Spulen einer gemeinsamen Phase gleichzeitig elektrisch versorgt werden und jede Phase mindestens zwei Paare von diametral entgegengesetzten Spulen aufweist, dadurch gekennzeichnet, daß die Spulen auf zwei Schichten, eine untere und eine obere, verteilt sind, wobei die unteren Spulen (A1, A3, C1, C3, B2, B4) mit den oberen Spulen (B1, B3, A2, A4, C2, C4) abwechseln, jede Phase ein in der unteren Schicht angeordnetes Paar von diametral entgegengesetzten Spulen und ein in der oberen Schicht angeordnetes Paar von diametral entgegengesetzten Spulen aufweist, diese beiden Paare elektrisch parallelgeschaltet sind, jede Spule zwei Wicklungen, eine untere (A11, B11, C11, A21, B21, C21, A31, B31, C31, A41, B41, C41) und eine obere (A12, B12, C12, A22, B22, C22, A32, B32, C32, A42, B42, C42), und zwei elektrisch parallelgeschaltete ununterbrochene, gewickelte Leiter (1, 2) umfaßt und jeder Leiter (K1, K2) die untere Wicklung einer Spule eines Paares und die obere Wicklung der anderen Spule dieses Paares bildet, so daß die untere und die obere Wicklung elektrisch in Reihe geschaltet sind und jedes Spulenpaar eine Spule für den Stromeingang in das Paar und eine Spule für den Stromausgang aus diesem Paar aufweist.

2. Elektromotor nach Anspruch 1, dadurch gekennzeichnet, daß der Anker (12) feststehend ist und daß der Motor außerdem einen Träger (34), der eine elektronische Schaltung (36) zur Versorgung und Umschaltung der Spulen trägt, und ein zum Gestell (16) koaxiales elektrisches Verbindungsorgan (40) von allgemein zylindrischer Form aufweist, das einen in elektrisch isolierte Sektoren (E1, E2, E3, S) geteilten leitenden Ring (42) aufweist, der eine erste Seite, die mit Mitteln (44) zum Einhaken an dem Gestell versehen ist, eine zweite Seite, die mit leitenden Stiften (46) zur Verbindung mit der elektronischen Schaltung (36) versehen ist, und leitende Umfangshaken (48) zur Verbindung der Spulen mit dem Ring (42) aufweist, wobei die Anzahl der Verbindungsstifte (46) gleich der Anzahl der isolierten Sektoren (E1, E2, E3, S) und die Anzahl der Verbindungshaken (48) gleich der Anzahl der Spulen des Ankers ist.

3. Elektromotor nach Anspruch 2, dadurch gekennzeichnet, daß der Ring (42) einen Stromeingangssektor (E1 bis E3) pro Phase aufweist, mit dem die die Stromeingänge der Spulenpaare dieser Phase bildenden Enden der Leiter (K1, K2) verbunden sind, sowie einen Ausgangssektor (S), mit dem alle die Stromausgänge aller Spulenpaare bildenden Enden der Leiter (K1, K2) verbunden sind.

4. Elektromotor nach Anspruch 3, dadurch gekennzeichnet, daß der Anker (12) zwölf auf die drei Phasen verteilte Spulen besitzt, wobei die Paare von diametral entgegengesetzten Spulen einer gemeinsamen Phase zueinander im rechten Winkel angeordnet sind, die Verbindungshaken (48) winkelmäßig auf Höhe der Spulen angeordnet sind, der Stromeingang (bzw. Stromausgang) des unteren Spulenpaars einer Phase mit einem Stromeingangshaken (bzw. Stromausgangshaken) verbunden ist, der gegen die Stromeingangsspule (bzw. Stromausgangsspule) dieses Paares um 60° versetzt ist, und der Eingang (bzw. Ausgang) des oberen Spulenpaares einer Phase mit einem Stromeingangshaken (bzw. Stromausgangshaken) verbunden ist, der auf Höhe der Stromeingangsspule (bzw. Stromausgangsspule) dieses Paares angeordnet ist, so daß die beiden mit den beiden Spulenpaaren einer Phase verbundenen Stromeingangshaken nebeneinanderliegen und zu einem gemeinsamen Stromeingangssektor (E1 bis E3) gehören und alle Stromausgangshaken nebeneinanderliegen und zum Ausgangssektor (S) gehören.

5. Verfahren zur Herstellung eines Elektromotors nach einem der vorhergehenden Ansprüche, dadurch gekennzeichnet, daß man jedes Paar von diametral entgegengesetzten Spulen mit Hilfe einer Wickelmaschine mit zwei Armen wickelt, wobei diese beiden Arme in einem ersten Schritt gleichzeitig die beiden unteren Wicklungen der Spulen wickeln, dann in einem zweiten Schritt, nach Drehung des Gestells (16) um seine Achse um eine halbe Umdrehung, die oberen Wicklungen der Spulen, wobei die beiden entsprechenden Leiter (K1, K2) durch die beiden Arme der Wickelmaschine während dieser beiden Schritte in Richtungen gewickelt werden, die bezüglich einer zur Fluchtlinie der Spulen des Paares senkrechten diametralen Ebene des Gestells (16) symmetrisch sind.

## Claims

1. Direct current electric motor, of the type comprising an armature (12) provided with a carcass (16) of generally cylindrical shape carrying conductive coils (A1 to A4, B1 to B4, C1 to C4) distributed in three phases and in at least two layers, the coils of a same phase being supplied with electricity simultaneously, each phase comprising at least two pairs of diametrically opposite coils, characterised in that the coils are distributed in two layers, an upper layer and a lower layer, the lower coils (A1, A3, C1, C3, B2, B4) alternating with the upper coils (B1, B3, A2, A4, C2, C4), each phase comprising a pair of diametrically opposite coils disposed in the lower layer and a pair of diametrically opposite coils disposed in the upper layer, these two pairs being electrically connected in parallel, each coil comprising two windings, a lower winding (A11, B11, C11, A21, B21, C21, A31, B31, C31, A41, B41, C41) and an upper winding (A12, B12, C12, A22, B22, C22, A32, B32, C32, A42, B42, C42) and two interrupted wound conductors (K1, K2) electrically connected in parallel, each conductor (K1, K2) forming the lower winding of one coil of a pair and the upper winding of the other coil of that pair, in such away that these upper and lower windings are electrically connected in series, and such that each pair of coils comprises a current input coil of the pair and a current output coil of that pair.

2. Electric motor according to claim 1, characterised in that the armature (12) is fixed and in that the motor furthermore comprises a support (34) carrying an electronic circuit (36) for supplying and switching the coils, and an electrical connection device (40) of generally cylindrical shape, coaxial with the carcass (16), comprising a conductive ring (42) divided into electrically insulated sectors (E1, E2, E3, S), this ring (42) comprising a first face provided with means (44) of attachment to the carcass, a second face provided with conductive pins (46) for connection with the electronic circuit (36) and conductive peripheral hooks (48) for connecting the coils with the ring (42), the number of connecting pins (46) being equal to the number of insulated sectors (E1, E2, E3, S) and the number of connecting hooks (48) being equal to the number of coils of the armature.

3. Electric motor according to claim 2, characterised in that the ring (42) comprises one current input sector (E1 to E3) per phase onto which are connected the ends of the conductors (K1, K2) forming the current inputs of the pairs of coils of that phase, and an output sector (S) onto which are connected all of the ends of the conductors (K1, K2) forming the current outputs of all the pairs of coils.

4. Electric motor according to claim 3, characterised in that the armature (12) comprises twelve coils distributed in the three phases, the pairs of diametrically opposite coils of a same phase being disposed at right angles with respect to one another, the connecting hooks (48) being distributed angularly at right angles to the coils, the current input, and output respectively, of the lower pair of coils of a phase being connected to a current input hook and output hook respectively, offset by 60° with respect to the current input hook and output hook respectively of that phase, and the input and output respectively of the upper pair of coils of a phase being connected to a current input hook and output hook respectively, disposed at right angles to the current input hook and output hook respectively of that pair, in such a way that the two current input hooks connected to the two pairs of coils of one phase are juxtaposed and belong to the same current input sector (E1 to E3) and that all of the current output hooks are juxtaposed and belong to the output sector (S).

5. Method of manufacturing an electric motor according to any one of the preceding claims, characterised in that each pair of diametrically opposite coils is formed by means of a winding machine having two arms, these two arms simultaneously producing, during a first stage, the two lower windings of the coils and then, during a second stage, after rotation of the armature (16) through half of a turn about its axis, the upper windings of the coils, the corresponding two conductors (K1, K2) being wound by the two arms of the winding machine during these two stages in symmetrical directions with respect to a diametrical plane of the carcass (16) perpendicular to the alignment of the coils of the pair.
